# EUROPEAN PATENT APPLICATION

(11) **EP 4 247 053 A1**
(43) Date of publication of application: **20.09.2023**
(21) Application number: 21909434.9
(22) Date of filing: 22.12.2021
(51) Int. Cl.: H04W 36/00

(54) **CELL SWITCHING METHOD, TERMINAL DEVICE, AND NETWORK DEVICE**

(30) Priority: 25.12.2020 CN 202011568733
(71) Applicant: Vivo Mobile Communication Co., Ltd., Dongguan, Guangdong 523863 (CN)
(72) Inventor: LIU, Xuanbing, Dongguan, Guangdong 523863 (CN); BAO, Wei, Dongguan, Guangdong 523863 (CN); YANG, Xiaodong, Dongguan, Guangdong 523863 (CN)
(74) Representative: Murgitroyd & Company
(86) International application number: PCT/CN2021/140306
(87) International publication number: WO 2022/135438

(57) **Abstract**

This application discloses a cell handover method, a terminal device, and a network device, and belongs to the field of communication. The method includes: sending secondary cell group SCG suspend status information to a target node, where the SCG suspend status information is used for indicating that UE is in an SCG suspended state.

## Description

### CROSS-REFERENCE TO RELATED APPLICATION

This application claims priority to Chinese Patent Application No. 202011568733.7, entitled "CELL HANDOVER METHOD, TERMINAL DEVICE, AND NETWORK DEVICE", filed with the Chinese Patent Office on December 25, 2020, which is incorporated herein by reference in its entirety.

### TECHNICAL FIELD

Embodiments of the present invention relate to the field of communication, and in particular, to a cell handover method, a terminal device, and a network device.

### BACKGROUND

A 5G new radio (New Radio, NR) system and a long term evolution (Long Term Evolution, LTE) system may be coupled in a dual connectivity (Dual Connectivity, DC) manner. One system is used as a master node (Master Node, MN) and the other system is used as a secondary node (Secondary Node, SN). In a dual connectivity system, there are two cell groups, that is: a master cell group (Master Cell Group, MCG) and a secondary cell group (Secondary Cell Group, SCG).

In some scenarios, user equipment (User Equipment, UE) may be referred to as a terminal device or a user terminal, and may suspend an SCG connection to perform another task. For example, for a multi-SIM terminal supporting multi-RAT dual connectivity (Multi-RAT Dual Connectivity, MR-DC), the multi-SIM terminal may include a plurality of UEs, one card corresponds to one UE, and the terminal may suspend an SCG connection of one UE to perform a task of another UE corresponding to another card. However, in a case that the UE initiates SCG suspend, SCG states between network nodes cannot be synchronized when handover occurs.

### SUMMARY

Embodiments of this application provide a cell handover method, a terminal device, and a network device, which can synchronize SCG states between network nodes when handover occurs.

According to a first aspect, a cell handover method is provided, and is performed by a source node. The method includes: sending secondary cell group SCG suspend status information to a target node, where the SCG suspend status information is used for indicating that UE is in an SCG suspended state.

According to a second aspect, a cell handover method is provided, and is performed by a target node. The method includes: receiving SCG suspend status information sent by a source node, where the SCG suspend status information is used for indicating that UE is in an SCG suspended state.

According to a third aspect, a cell handover method is provided, and is performed by user equipment. The method includes: receiving, in an SCG suspended state, a handover configuration message; receiving, in the SCG suspended state, the handover configuration message; performing, in the SCG suspended state, an SCG operation process based on the handover configuration message, where the SCG operation process includes one of the following: adding an SCG, modifying an SCG, and releasing the SCG; and maintaining in the SCG suspended state. According to a fourth aspect, a cell handover apparatus is provided, and includes: a sending module, configured to send secondary cell group SCG suspend status information to a target node, where the SCG suspend status information is used for indicating that UE is in an SCG suspended state.

According to a fifth aspect, a cell handover apparatus is provided, and includes: a processing module, configured to receive SCG suspend status information sent by a source node, where the SCG suspend status information is used for indicating that UE is in an SCG suspended state.

According to a sixth aspect, a cell handover apparatus is provided, and includes: a receiving module, configured to receive a handover configuration message in an SCG suspended state.

According to a seventh aspect, a network device is provided. The network device includes a processor, a memory, and a program or instruction stored in the memory and executable on the processor, where when the program or instruction is executed by the processor, steps of the method according to the first aspect or the second aspect are implemented.

According to an eighth aspect, a terminal device is provided. The terminal device includes a processor, a memory, and a program or instruction stored in the memory and executable on the processor, where when the program or instruction is executed by the processor, steps of the method according to the third aspect are implemented.

According to a ninth aspect, a readable storage medium is provided. The readable storage medium stores a program or instruction, where when the program or instruction is executed by a processor, steps of the method according to the first aspect, or the second aspect, or the third aspect are implemented.

According to a tenth aspect, a computer program product is provided. The computer program product includes a processor, a memory, and a program or instruction stored in the memory and executable on the processor, where when the program or instruction is executed by the processor, steps of the method according to the first aspect, or the second aspect, or the third aspect are implemented.

According to an eleventh aspect, a chip is provided. The chip includes a processor and a communication interface, where the communication interface is coupled to the processor, and the processor is configured to execute a program or instruction, to implement the method according to the first aspect, or the second aspect, or the third aspect.

Embodiments of the present invention provide a cell handover method, a terminal device, and a network device. By sending secondary cell group SCG suspend status information to a target node, where the SCG suspend status information is used for indicating that UE is in an SCG suspended state, which can synchronize SCG states between network nodes when handover occurs.

### BRIEF DESCRIPTION OF THE DRAWINGS

The accompanying drawings described herein are used for providing a further understanding of this application, and form part of this application. Exemplary embodiments of this application and descriptions thereof are used for explaining this application, and do not constitute any inappropriate limitation to this application. In the accompanying drawings:
FIG. 1 is a schematic diagram of a wireless communication system to which the embodiments of this application are applicable.
FIG. 2 is a schematic flowchart of a cell handover method according to an embodiment of the present invention;
FIG. 3 is a schematic flowchart of a cell handover method according to another embodiment of the present invention;
FIG. 4 is a schematic flowchart of a cell handover method according to another embodiment of the present invention;
FIG. 5 is a schematic flowchart of a cell handover apparatus according to an embodiment of the present invention;
FIG. 6 is a schematic flowchart of a cell handover apparatus according to another embodiment of the present invention;
FIG. 7 is a schematic flowchart of a cell handover apparatus according to another embodiment of the present invention;
FIG. 8 is a schematic structural diagram of a network device according to another embodiment of the present invention; and
FIG. 9 is a schematic structural diagram of a terminal device according to another embodiment of the present invention.

### DETAILED DESCRIPTION

The following clearly and completely describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application without creative efforts shall fall within the protection scope of this application.

The specification and claims of this application, and terms "first" and "second" are used to distinguish similar objects, but are unnecessarily used to describe a specific sequence or order. It may be understood that data used in such a way is interchangeable in proper circumstances, so that the embodiments of this application described herein can be implemented in other sequences than the sequence illustrated or described herein. In addition, "and/or" in this specification and the claims represents at least one of the connected objects, and the character "/" generally represents an "or" relationship between the associated objects.

It should be noted that, the technologies described in the embodiments of this application are not limited to a Long Term Evolution (Long Term Evolution, LTE) system or an LTE-Advanced (LTE-Advanced, LTE-A) system, and may further be applied to other wireless communication systems, such as, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), and Single-carrier Frequency-Division Multiple Access (Single-carrier Frequency-Division Multiple Access, SC-FDMA). The terms "system" and "network" in the embodiments of this application are often used interchangeably, and the described technology can be used not only for the above systems and radio technologies, but also for other systems and radio technologies. However, the following description describes a new radio (New Radio, NR) system for example objectives, and NR terms are used in most of the description below, although these technologies are also applicable to applications other than NR system applications, such as a 6-th generation (6-th Generation, 6G) communication system.

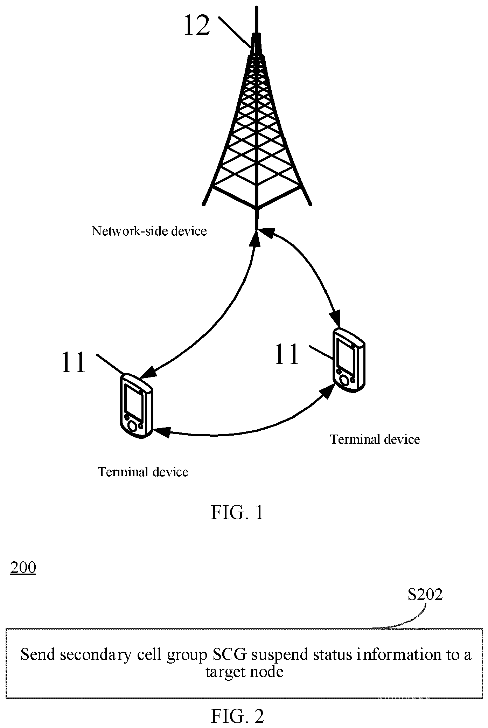

FIG. 1 is a schematic diagram of a wireless communication system to which the embodiments of this application are applicable. The wireless communication system includes a terminal 11 and a network-side device 12. The terminal 11 may also be referred to as a terminal device or a user terminal (User Equipment, UE). The terminal 11 may be, for example, a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), an in-vehicle device (VUE), or a pedestrian terminal (PUE). The wearable device includes: a bracelet, earphones, glasses, or the like. It should be noted that, a specific type of the terminal 11 is not limited in the embodiments of this application. The network-side device 12 may be a base station or a core network, where the base station may be referred to as an Node B, an evolved Node B, an access point, a base transceiver station (Base Transceiver Station, BTS), a radio base station, a radio transceiver, a basic service set (Basic Service Set, BSS), an extended service set (Extended Service Set, ESS), an Node B, an evolved Node B (eNB), a home Node B, a home evolved Node B, a WLAN access point, a WiFi node, a transmitting receiving point (Transmitting Receiving Point, TRP) or some other suitable terms in the field. As long as the same technical effect is achieved, the base station is not limited to a specific technical word. It should be noted that, only a base station in an NR system is used as an example in the embodiments of this application, but a specific type of the base station is not limited.

A cell handover method provided in the embodiments of this application is described below through specific embodiments and application scenarios thereof with reference to the accompanying drawings.

As shown in FIG. 2, an embodiment of the present invention provides a cell handover method 200, which may be performed by a network device. In other words, the method may be performed by a software or hardware installed on the network device, the network device may be a source node, and the method includes the following steps:
S202: Send secondary cell group SCG suspend status information to a target node.

The SCG suspend status information is used for indicating that UE is in an SCG suspended state. The target node receives SCG suspend status information sent by the source node.

In an implementation, UE may be UE in a multi-SIM terminal. The multi-SIM terminal may include a plurality of UEs and may camp on a plurality of networks at the same time.

In an implementation, the SCG suspended state includes at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

In an implementation, in a case that the source master node is switched, secondary cell group SCG suspend status information is sent to a target node.

The cell handover method provided in the embodiments of the present invention can synchronize SCG states between network nodes when handover occurs by sending the secondary cell group SCG suspend status information to the target node.

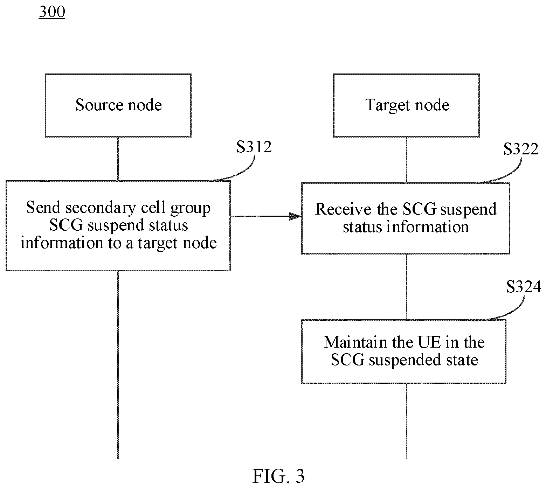

As shown in FIG. 3, an embodiment of the present invention provides a cell handover method 300, which may be performed by a network device and/or UE. In other words, the method may be performed by a software or hardware installed on the network device and/or UE, and the network device may include: a source node, a target node. The method includes the following steps:
S312: The source node sends secondary cell group SCG suspend status information to the target node.

The SCG suspend status information is used for indicating that UE is in an SCG suspended state.

This step may be described in step S202 of the embodiment in FIG. 2, and details are not described herein again.

S322: The target node receives SCG suspend status information sent by the source node.

Corresponding to a previous step, the target node receives the SCG suspend status information sent by the source node. A content, a sending timing, and a mode included in the SCG suspend status information are the same as those of the previous step, and details are not described herein again.

S324: Maintain the UE in the SCG suspended state.

The cell handover method provided in the embodiments of the present invention can synchronize SCG states between network nodes in case that the UE initiates the SCG suspend by sending the secondary cell group SCG suspend status information to the target node.

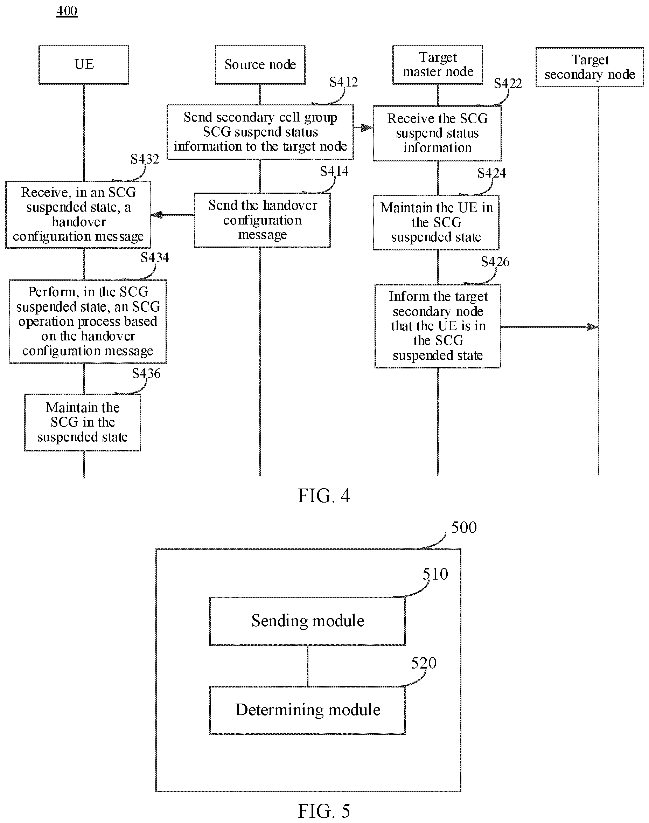

As shown in FIG. 4, an embodiment of the present invention provides a cell handover method 400, which may be performed by a network device and/or UE. In other words, the method may be performed by a software or hardware installed on the network device and/or UE, and the network device may include: a source node, a target master node, and a target secondary node. The method includes the following steps:
S412: The source node sends secondary cell group SCG suspend status information to the target master node.

The source node may be a source master node, and the SCG suspend status information is used for indicating that UE is in an SCG suspended state.

This step may be described in step S202 of the embodiment in FIG. 2, and details are not described herein again.

S422: The target master node receives the SCG suspend status information sent by the source node.

S424: Maintain the UE in the SCG suspended state.

Step S422 to S424 may be described in step S322-S324 of the embodiment in FIG. 3, and details are not described herein again.

S426: The target master node notifies the target secondary node that the UE is in the SCG suspended state.

Optionally, information for notifying the target secondary node that the UE is in the SCG suspended state is included in a secondary node addition request message.

S414: The source node sends a handover configuration message to the UE.

Optionally, the handover configuration message is used for at least one of the following: adding an SCG, modifying an SCG, and releasing an SCG.

S432: The UE receives the handover configuration message in the SCG suspended state.

S434: The UE performs, in the SCG suspended state, an SCG operation process based on the handover configuration message.

The SCG operation process includes one of the following: adding the SCG, modifying the SCG, and releasing the SCG.

S436: After the UE performs the SCG operation process, the UE maintains the SCG suspended state.

The cell handover method provided in the embodiments of the present invention can synchronize SCG states between network nodes when handover occurs in a case that the UE initiates the SCG suspend by sending the secondary cell group SCG suspend status information to the target master node and the target master node notifies the target secondary node that the UE is in the SCG suspended state.

Specifically, a MR-DC handover process may include:
1. A source master node starts the handover process and sends a handover request message to a target master node. Optionally, SCG suspend status information in the step S412 may be carried in the handover request message.
2. The target master node sends a secondary node addition request message (SN Addition Request) to a target secondary node. The target master node optionally retains a source secondary node, in this case, the target secondary node is the source secondary node. Optionally, information used for notifying the target secondary node that the UE is in the SCG suspended state in the step S426 may be carried in the SN addition request, that is, the SN addition request may include the SCG suspend status information.
3. The target secondary node responds to a target master node addition request acknowledge message (SN Addition Request Acknowledge);
4. The target master node sends a handover request acknowledge message (Handover Request Acknowledge Message) to the source master node.
5. The source master node releases the source secondary node.
6. In the step S414, the source master node sends a handover configuration message to the UE to perform the handover, and in the step S432, the UE receives the handover configuration message in the SCG suspended state.
7/8. In the step S434, the UE performs, in the SCG suspended state, the SCG operation process based on the handover configuration message, for example, the UE synchronizes to the target master node and sends a reconfiguration complete message.
9. Optionally, the UE accesses the target secondary node.
10. The target master node notifies the target secondary node that a reconfiguration is completed.
11. Optionally, the source master node sends a secondary node status transfer message (SN Status Transfer) to the target master node. The target master node transfers secondary node status (SN Status) to the target secondary node. Optionally, the SCG suspend status information in the step S412 may further be carried in the handover request message.
12/13. The target master node initiates a UE context release process.

The following describes the foregoing steps in detail with some embodiments.

In Example 1, SCG suspend may be notified in a handover request, and a handover process may include:
0. UE is connected and an SCG connection has been established.

The UE reports the secondary cell group suspend (SCG Suspend) to a network.

After the network receives secondary cell group suspend information, the network is unable to send and receive information through the SCG connection.

The UE is in a connection mode.

The secondary cell group suspend includes, but is not limited to:
the SCG is in a suspended state (SCG Suspend);
the SCG connection is suspended by the SCG suspend process initiated by the UE (UE initiated SCG Suspend);
UE suspends an SCG connection that has been established (UE SCG Suspend);
the UE does not establish an SCG connection, but the UE temporarily suspends a MR-DC capability (UE SCG Capability Suspend);
the UE does not establish the SCG connection, but the UE temporarily suspends a MR-DC terminal resource (UE SCG Resource Suspend); and
the SCG is in a multi-SIM suspended state (SCG Suspend by Multi-SIM).

1. The source master node initiates the handover process, and the source master node sends a handover request message (Handover Request) to the target master node.

The SCG suspend status information includes, but is not limited to:
SCG suspend (SCG Suspend);
the SCG connection is suspended by the SCG suspend process initiated by the UE (UE initiated SCG Suspend);
the UE temporarily suspends a MR-DC capability (UE SCG Capability Suspend);
the UE suspends a MR-DC terminal resource (UE SCG Resource Suspend); and
SCG Suspend by Multi-SIM.

Optionally, in step S412, the source master node carries SCG suspend status information in the handover request message. The SCG suspend status information may be included in a UE context information element of the handover request message.

2. The target master node sends an SN addition request to the target secondary node. In the step S426, the SN addition request may include the SCG suspend status information to notify a target secondary node that the UE is in the SCG suspended state.

The target secondary node sends a response SN addition request acknowledge message to the target master node.
3. In the step S414, the source master node sends a handover configuration message to the UE to perform handover. The handover configuration message includes SCG configuration information.
4. In the step S432, the UE receives the handover configuration message. Optionally, in step S436, the network may configure the UE to maintain the SCG in the suspended state. In the step S434, the UE performs, in the SCG suspended state, the SCG operation process based on the handover configuration message, for example, the UE synchronizes to the target master node and sends a reconfiguration complete message.
5. Optionally, the UE synchronizes or measures the target secondary node.

In Example 2, the SCG suspend may be notified by SN status transfer, and a handover process may include:
1. UE is connected and an SCG connection has been established.

The UE reports the secondary cell group suspend (SCG Suspend) to a network.

After the network receives secondary cell group suspend information, the network is unable to send and receive information through the SCG connection.

The UE is in a connection mode.

The secondary cell group suspend includes, but is not limited to:
the SCG is in a suspended state (SCG Suspend);
the SCG connection is suspended by the SCG suspend process initiated by the UE (UE initiated SCG Suspend);
UE suspends an SCG connection that has been established (UE SCG Suspend);
the UE does not establish an SCG connection, but the UE temporarily suspends a MR-DC capability (UE SCG Capability Suspend);
the UE does not establish the SCG connection, but the UE temporarily suspends a MR-DC terminal resource. (UE SCG Resource Suspend); and
SCG Suspend by Multi-SIM.

2. The network initiates a handover process. In the step S432, the UE receives a handover configuration message RRC. Optionally, the handover configuration message includes SCG configuration. In the step S434, the UE performs, in the SCG suspended state, the SCG operation process based on the handover configuration message, for example, the UE sends the reconfiguration complete message. Optionally, in the step S436, the network configures the UE to maintain the SCG suspend.
3. The source secondary node sends an SN status transfer message to the source master node. The SN status transfer includes SCG suspend status information.
   The SCG suspend status information includes, but is not limited to:
   SCG suspend (SCG Suspend);
   the SCG connection is suspended by the SCG suspend process initiated by the UE (UE initiated SCG Suspend);
   the UE temporarily suspends a MR-DC capability (UE SCG Capability Suspend);
   the UE temporarily suspends a MR-DC terminal resource (UE SCG Resource Suspend); and
   SCG Suspend by Multi-SIM.
4. The source master node sends an SN status transfer message to a target master node. The SN status transfer includes SCG suspend status information. That is, the SCG suspend status information in the step S412 may be carried in the SN status transfer.
5. The target master node receives the SN status transfer message.
6. Optionally, the target master node sends the SN status transfer message to the target secondary node. In the step S426, information used for notifying the target secondary node that the UE is in the SCG suspended state may be carried in SN status transfer, that is, the SN status transfer includes SCG suspend status information.

In Example 3, when the SCG connection is not established, the handover process may include:
1. When UE is in a connected state, an SCG connection is not established.

The UE reports the secondary cell group suspend (SCG Suspend) to a network.

After the network receives secondary cell group suspend information, the network is unable to send and receive information through the SCG connection. The UE is in a connection mode.

The secondary cell group suspend includes, but is not limited to:
SCG suspend (SCG Suspend);
the UE temporarily suspends a MR-DC capability (UE SCG Capability Suspend);
the UE temporarily suspends a MR-DC terminal resource, for example, a terminal physical layer resource. (UE SCG Resource Suspend); and
SCG Suspend by Multi-SIM.

2. The source master node initiates the handover process, and the source master node sends the handover request (Handover Request) message to the target master node.

The SCG suspend status information includes, but is not limited to:
SCG suspend (SCG Suspend);
the UE temporarily suspends a MR-DC capability (UE SCG Capability Suspend);
the UE temporarily suspends a MR-DC terminal resource, for example, a terminal physical layer resource (UE SCG Resource Suspend); and
SCG Suspend by Multi-SIM.

Optionally, in step S412, the source master node carries SCG suspend status information in the handover request message. The SCG suspend status information may be included in a UE context information element of the handover request message.
3. In the step S414, the source master node sends a handover configuration message to the UE to perform handover. The handover configuration message optionally includes SCG configuration information.
4. In the step S432, the UE receives the handover configuration message. Optionally, In the step S436, the UE maintains the SCG in the suspended state. In the step S434, the UE performs, in the SCG suspended state, the SCG operation process based on the handover configuration message, for example, the UE synchronizes to the target master node and sends a reconfiguration complete message.

In the foregoing steps, an interaction between the network device and the terminal device described from the network-side device is the same as that described from the terminal device side, and the relevant description is appropriately omitted to avoid repetition.

It should be noted that, in the cell handover method provided in the embodiments of this application, an execution entity may be a cell handover apparatus, or a control module configured to execute and load the foregoing method in the apparatus. In the embodiments of this application, an example in which the cell handover apparatus executes and loads the cell handover method is used to describe the cell handover method provided in the embodiments of this application.

FIG. 5 is a schematic structural diagram of a cell handover apparatus according to an embodiment of the present invention. As shown in FIG. 5, the cell handover apparatus 500 includes: a sending module 510 and a determining module 520.

The sending module 510 is configured to send secondary cell group SCG suspend status information to a target node, where the SCG suspend status information is used for indicating that UE is in an SCG suspended state.

In an implementation, the sending module 510 is further configured to: after sending the secondary cell group SCG suspend status information to the target node, send a handover configuration message to the UE.

In an implementation, the SCG is in the suspended state, and the handover configuration message is used for one of the following: adding an SCG, modifying an SCG, and releasing an SCG.

In an implementation, the SCG suspended state includes at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

In an implementation, the SCG suspend status information is included in a handover request message or a secondary node status transfer message.

In an implementation, the determining module 520 is configured to determine secondary cell group SCG suspend status information before sending the secondary cell group SCG suspend status information to a target node.

The cell handover apparatus in the embodiments of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a handheld computer, an in-vehicle electronic device, a wearable device, an ultra-mobile personal computer (ultra-mobile personal computer, UMPC), a netbook, or a personal digital assistant (personal digital assistant, PDA), and the non-mobile electronic device may be a server, a network attached storage (Network Attached Storage, NAS), a personal computer (personal computer, PC), a television (television, TV), a teller machine, or a self-service machine, which are not specifically limited in the embodiments of this application.

The cell handover apparatus in the embodiments of this application may be an apparatus having an operating system. The operating system may be Android (Android) operating system, may be an ios operating system, or another possible operating system, which are not specifically limited in the embodiments of this application.

The apparatus 500 according to an embodiment of the present invention may refer to a process of the source node in the methods 200 to 400 corresponding to the embodiments of the present invention, and each unit/module in the apparatus 500 and other operations and/or functions described above are respectively intended to implement a corresponding process in the methods 200 to 400 and are capable of achieving the same or equivalent technical effects. For brevity, details are not described herein again.

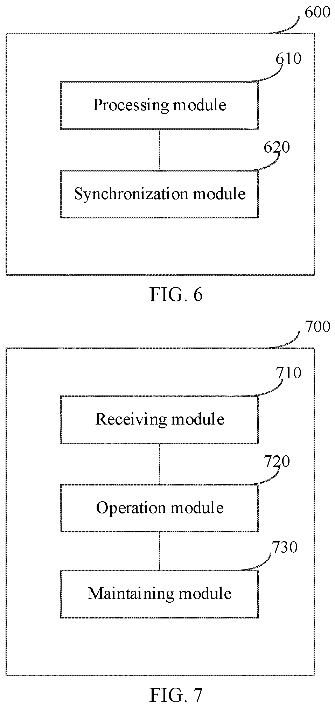

FIG. 6 is a schematic structural diagram of a cell handover apparatus according to an embodiment of the present invention. As shown in FIG. 6, the cell handover apparatus 600 includes: a processing module 610 and a synchronization module 620.

The processing module 610 is configured to receive SCG suspend status information sent by a source node, where the SCG suspend status information is used for indicating that UE is in an SCG suspended state.

In an implementation, the processing module 610 is further configured to: after receiving the SCG suspend status information sent by a source node, maintain the UE in the SCG suspended state.

In an implementation, in a case that the target node is a target master node, the processing module 610 is further configured to: after receiving the secondary cell group SCG suspend status information that is sent by the source node and initiated by UE, notify a target secondary node that the UE is in the SCG suspended state.

In an implementation, information for notifying a target secondary node that the UE is in an SCG suspended state is included in a secondary node addition request message.

In an implementation, the SCG suspended state includes at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

In an implementation, the SCG suspend status information is included in a handover request message or a secondary node status transfer message.

The cell handover apparatus in the embodiments of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a handheld computer, an on-board electronic device, a wearable device, an ultra-mobile personal computer (ultra-mobile personal computer, UMPC), a netbook, or a personal digital assistant (personal digital assistant, PDA), and the non-mobile electronic device may be server, a network attached storage (Network Attached Storage, NAS) a personal computer (personal computer, PC), a television (television, TV), a teller machine, or self-service machine, which are not specifically limited in this embodiment of this application.

The cell handover apparatus in the embodiments of this application may be an apparatus having an operating system. The operating system may be Android operating system, an ios operating system, or other possible operating system. This embodiment of this application is not specifically limited.

The apparatus 600 according to an embodiment of the present invention may refer to a process of the target node in the methods 200 to 400 corresponding to the embodiments of the present invention, and each unit/module in the apparatus 600 and other operations and/or functions described above are respectively intended to implement a corresponding process in the methods 200 to 400 and are capable of achieving the same or equivalent technical effects. For brevity, details are not described herein again.

FIG. 7 is a schematic structural diagram of a cell handover apparatus according to an embodiment of the present invention. As shown in FIG. 7, the cell handover apparatus 700 includes: a receiving module 710, an operation module 720, and a maintaining module 730.

The receiving module 710 is configured to receive a handover configuration message in an SCG suspended state.

The operation module 720 is configured to perform, in the SCG suspended state, an SCG operation process based on the handover configuration message after receiving the handover configuration message in the SCG suspended state, and the SCG operation process includes one of the following: adding the SCG, modifying the SCG, and releasing the SCG.

The maintaining module 730 is configured to maintain in the SCG suspended state.

In an implementation, the SCG suspended state includes at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

The cell handover apparatus in the embodiments of this application may be an apparatus, or may be a component, an integrated circuit, or a chip in a terminal. The apparatus may be mobile electronic device, or may be non-mobile electronic device. For example, the mobile electronic device may be a mobile phone, a tablet computer, a laptop computer, a handheld computer, an on-board electronic device, a wearable device, an ultra-mobile personal computers (ultra-mobile personal computer, UMPC), a netbook, or a personal digital assistant (personal digital assistant, PDA), and the non-mobile electronic device may be server, a network attached storage (Network Attached Storage, NAS) a personal computer (personal computer, PC), a television (television, TV), a teller machine, or self-service machine, which are not specifically limited in this embodiment of this application.

The cell handover apparatus in the embodiments of this application may be an apparatus having an operating system. The operating system may be Android operating system, an ios operating system, or other possible operating system. This embodiment of this application is not specifically limited.

The apparatus 700 according to an embodiment of the present invention may refer to a process of the target node in the methods 200 to 400 corresponding to the embodiments of the present invention, and each unit/module in the apparatus 700 and other operations and/or functions described above are respectively intended to implement a corresponding process in the methods 200 to 400 and are capable of achieving the same or equivalent technical effects. For brevity, details are not described herein again.

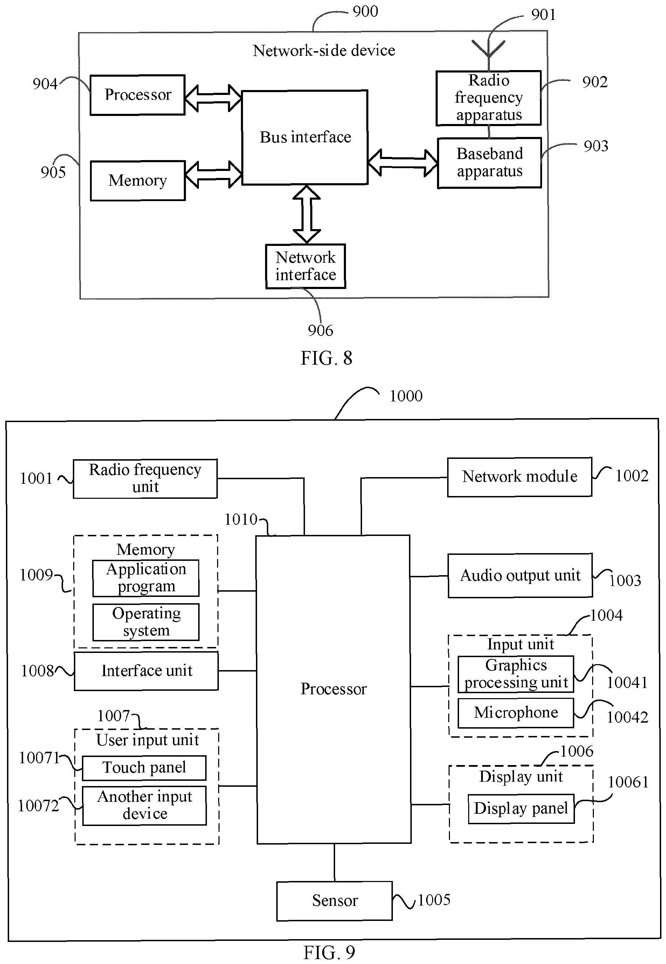

Specifically, an embodiment of this application further provides a network-side device. As shown in FIG. 8, the network device 900 includes: an antenna 901, a radio frequency apparatus 902, and a baseband apparatus 903. The antenna 901 is connected to the radio frequency apparatus 902. In an uplink direction, the radio frequency apparatus 902 receives information through the antenna 901 and sends the received information to the baseband apparatus 903 for processing. In a downlink direction, the baseband apparatus 903 processes information that needs to be sent and sends the information to the radio frequency apparatus 902. The radio frequency apparatus 902 processes the received information and sends the received information through the antenna 901.

The baseband processing apparatus may be located in the baseband apparatus 903, and the method performed by the network-side device in the foregoing embodiments may be implemented in the baseband apparatus 903. The baseband apparatus 903 includes a processor 904 and a memory 905.

The baseband apparatus 903 may, for example, include at least one baseband plate, and a plurality of chips are disposed on the baseband plate. As shown in the figure, one of the plurality of chips is, for example, the processor 904, connected to the memory 905 to invoke a program in the memory 905, to perform a network device operation shown in the foregoing method embodiments.

The baseband apparatus 903 may further include a network interface 906, configured to exchange information with the radio frequency apparatus 902. The interface is, for example, a common public radio interface (common public radio interface, CPRI).

Specifically, a network-side device in the embodiments of the present invention further includes: an instruction or a program stored in the memory 905 and executable on the processor 904. The processor 904 invokes the instruction or program in the memory 905 to perform: sending secondary cell group SCG suspend status information to a target node, where the SCG suspend status information is used for indicating that UE is in an SCG suspended state.

In an implementation, after the secondary cell group SCG suspend status information is sent to the target node, a handover configuration message is sent to the UE.

In an implementation, the SCG is in the suspended state, and the handover configuration message is used for one of the following: adding an SCG, modifying an SCG, and releasing an SCG.

In an implementation, the SCG suspended state includes at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

In an implementation, the SCG suspend status information is included in a handover request message or a secondary node status transfer message.

Alternatively, the processor 904 invokes an instruction or a program in the memory 905 to perform: receiving SCG suspend status information sent by a source node, where the SCG suspend status information is used for indicating that UE is in an SCG suspended state.

In an implementation, after the receiving SCG suspend status information sent by a source node, the method further includes: maintaining the UE in the SCG suspended state.

In an implementation, the target node is a target master node, and after the receiving secondary cell group SCG suspend status information that is sent by a source node and initiated by UE, the method further includes: notifying a target secondary node that the UE is in the SCG suspended state.

In an implementation, information for notifying a target secondary node that the UE is in an SCG suspended state is included in a secondary node addition request message.

In an implementation, the SCG suspended state includes at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

In an implementation, the SCG suspend status information is included in a handover request message or a secondary node status transfer message.

The specific steps performed by the processor 904 are shown in a process of the target node or the source node in FIG. 200 to FIG. 400, and the execution methods of each step are shown to achieve the same technical effects. To avoid repetition, details are not described herein.

FIG. 9 is a schematic diagram of a hardware structure of a terminal device for implementing the embodiments of this application.

The terminal device 1000 includes, but is not limited to: components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal device 1000 further includes a power supply (such as a battery) for supplying power to the components. The power supply may logically connect to the processor 1010 by using a power supply management system, thereby implementing functions, such as charging, discharging, and power consumption management, by using the power supply management system. A structure of the terminal device shown in the figure does not constitute a limitation to the terminal device, and the terminal device may include more or fewer components than those shown in the figure, or some components may be combined, or a different component deployment may be used. Details are not described herein again.

It should be understood that, in this embodiment of this application, the input unit 1004 may include a graphics processing unit (Graphics Processing Unit, GPU) 10041 and a microphone 10042. The graphics processing unit 10041 performs processing on image data of a static picture or a video that is obtained by an image acquisition apparatus (for example, a camera) in a video acquisition mode or an image acquisition mode. The display unit 1006 may include a display panel 10061, for example, the display panel 10061 may be configured in a form such as a liquid crystal display or an organic light-emitting diode. The user input unit 1007 includes a touch panel 10071 and another input device 10072. The touch panel 10071 is also referred to as a touch screen. The touch panel 10071 may include two parts: a touch detection apparatus and a touch controller. The another input device 10072 may include, but is not limited to, a physical keyboard, a functional key (such as a volume control key or a switch key), a track ball, a mouse, and a joystick, and details are not described herein again.

In this embodiment of this application, the radio frequency unit 1001 receives downlink data from a network-side device and sends the downlink data to the processor 1010 for processing. In addition, the radio frequency unit 1001 sends uplink data to the network-side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or instruction and various data. The memory 1009 may mainly include a program or instruction storage region and a data storage region. The program or instruction storage region may store an operating system, an application program or instruction required by at least one function (for example, a sound playback function and an image playback function), or the like. In addition, the memory 1009 may include a high speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the non-volatile memory may be at least one magnetic disk storage device, a flash memory device, or another volatile solid-state storage device.

The processor 1010 may include one or more processing units. Optionally, the processor 1010 may integrate an application processor and a modem. The application processor mainly processes an operating system, a user interface, an application program or instruction, and the like. The modem mainly processes wireless communication, such as a baseband processor. It may be understood that the foregoing modem processor may not be integrated into the processor 1010.

The processor 1010 is configured to receive the handover configuration message in the SCG suspended state;
perform, in the SCG suspended state, an SCG operation process based on the handover configuration message, and the SCG operation process includes one of the following: adding the SCG, modifying the SCG, and releasing the SCG; and maintain the SCG in the suspended state after the SCG operation process is performed based on the handover configuration message.

In an implementation, the SCG suspended state includes at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

The terminal device 1000 according to an embodiment of the present invention may refer to the process of the UE in the method 300-400 corresponding to the embodiments of the present invention, and each unit/module and other operations and/or functions described above in the terminal device 1000 are respectively intended to implement the process of the UE in the method 300-400 and are capable of achieving the same or equivalent technical effects, and will not be described herein again for brevity.

An embodiment of this application further provides a readable storage medium, storing a program or instruction. When the program or instruction is executed by a processor, all processes of the embodiments of the foregoing cell handover method are implemented, and the same technical effects can be achieved. To avoid repetition, details are not described herein again.

The processor is a processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, an optical disc, or the like.

An embodiment of this application further provides a chip, including: a processor and a communication interface, where the communication interface is coupled to the processor, and the processor is configured to execute a program or instruction, to implement all processes of the embodiments of the foregoing cell handover method, and can achieve the same technical effects. To avoid repetition, details are not described herein again.

It should be understood that, the chip mentioned in the embodiments of this application may further be referred to as a system-level chip, a system chip, a chip system, or a system on chip.

An embodiment of this application further provides a computer program product, including a processor, a memory, and a program or instruction stored in the memory and executable on the processor, where when the program or instruction is executed by the processor, steps of the method according to the first aspect are implemented.

It should be noted that, the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that, the scope of the method and apparatus in the embodiments of this application is not limited to performing functions in the order shown or discussed, and it may further include performing the functions in a substantially simultaneous manner or in reverse order according to the functions involved. For example, the described method may be performed in a different order than described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented through software and a necessary general hardware platform, and certainly, may alternatively be implemented by hardware, but in many cases, the former manner is a better implementation. Based on such an understanding, the technical solutions of this application essentially or a part that contributes to related technologies, may be embodied in the form of a software product. The computer software product may be stored in a storage medium (such as a ROM/RAM, a magnetic disk, and an optical disk), and includes several instructions to enable a terminal (which may be a mobile phone, a computer, a server, a network device, or the like) to perform the method described in the embodiments of this application.

The embodiments of this application are described above with reference to the accompanying drawings, but this application is not limited to the foregoing detailed description. The foregoing detailed description is merely illustrative rather than limited. Under the inspiration of this application, a person skilled in the art may make many forms without departing from the purpose of this application and the protection of the claims, all of which fall within the protection of this application.

## Claims

1. A cell handover method, performed by a source node, wherein the method comprises:
sending secondary cell group SCG suspend status information to a target node, wherein the SCG suspend status information is used for indicating that user equipment UE is in an SCG suspended state.

2. The method according to claim 1, wherein after the sending secondary cell group SCG suspend status information to a target node, the method further comprises:
sending a handover configuration message to the UE.

3. The method according to claim 2, wherein the handover configuration message comprises one of the following: adding an SCG, modifying an SCG, and releasing an SCG.

4. The method according to claim 1, wherein the SCG suspended state comprises at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

5. The method according to claim 1, wherein the SCG suspend status information is comprised in a handover request message or a secondary node status transfer message.

6. A cell handover method, performed by a target node, wherein the method comprises:
receiving SCG suspend status information sent by a source node, wherein the SCG suspend status information is used for indicating that UE is in an SCG suspended state.

7. The method according to claim 6, wherein after the receiving SCG suspend status information sent by a source node, the method further comprises:
maintaining the UE in the SCG suspended state.

8. The method according to claim 6, wherein the target node is a target master node, and after the receiving SCG suspend status information sent by a source node, the method further comprises:
notifying a target secondary node that the UE is in the SCG suspended state.

9. The method according to claim 8, wherein information for notifying the target secondary node that the UE is in the SCG suspended state is comprised in a secondary node addition request message.

10. The method according to claim 6, wherein the SCG suspended state comprises at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

11. The method according to claim 6, wherein the SCG suspend status information is comprised in a handover request message or a secondary node status transfer message.

12. A cell handover method, performed by user equipment, wherein the method comprises:
receiving, in an SCG suspended state, a handover configuration message;
performing, in the SCG suspended state, an SCG operation process based on the handover configuration message, wherein the SCG operation process comprises one of the following: adding an SCG, modifying an SCG, and releasing the SCG; and
maintaining in the SCG suspended state.

13. The method according to claim 12, wherein the SCG suspended state comprises at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

14. A cell handover apparatus, wherein the apparatus comprises:
a sending module, configured to send secondary cell group SCG suspend status information to a target node, wherein the SCG suspend status information is used for indicating that UE is in an SCG suspended state.

15. The apparatus according to claim 14, wherein the sending module is further configured to:
after sending the secondary cell group SCG suspend status information to the target node, send a handover configuration message to the UE.

16. The apparatus according to claim 15, wherein in a case that an SCG is in the suspended state, the handover configuration message is used for adding the SCG, modifying the SCG, and releasing the SCG.

17. The apparatus according to claim 14, wherein the SCG suspended state comprises at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

18. The apparatus according to claim 14, wherein the SCG suspend status information is comprised in a handover request message or a secondary node status transfer message.

19. A cell handover apparatus, wherein the apparatus comprises:
a processing module, configured to receive SCG suspend status information sent by a source node, wherein the SCG suspend status information is used for indicating that UE is in an SCG suspended state.

20. The apparatus according to claim 19, wherein the processing module is further configured to: after receiving the SCG suspend status information sent by the source node, maintain the UE in the SCG suspended state.

21. The apparatus according to claim 19, wherein in a case that the target node is a target master node, the processing module is further configured to:
after receiving the secondary cell group SCG suspend status information that is sent by the source node and initiated by UE, notify a target secondary node that the UE is in the SCG suspended state.

22. The apparatus according to claim 21, wherein information for notifying the target secondary node that the UE is in the SCG suspended state is comprised in a secondary node addition request message.

23. The apparatus according to claim 19, wherein the SCG suspended state comprises at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

24. The apparatus according to claim 19, wherein the SCG suspend status information is comprised in a handover request message or a secondary node status transfer message.

25. A cell handover apparatus, wherein the apparatus comprises:
a receiving module, configured to receive a handover configuration message in an SCG suspended state;
an operation module, configured to perform, in the SCG suspended state, an SCG operation process based on the handover configuration message, wherein the SCG operation process comprises one of the following: adding an SCG, modifying an SCG, and releasing an SCG; and
a maintaining module, configured to maintain in the SCG suspended state.

26. The apparatus according to claim 25, wherein the SCG suspended state comprises at least one of the following states:
UE-initiated SCG suspend;
SCG disabling;
dual connectivity capability suspend;
dual connectivity capability disabling;
SCG resource suspend;
SCG resource disabling;
SCG connection deactivation; and
SCG connection release.

27. A network device, comprising a processor, a memory, and a program or an instruction stored in the memory and executable on the processor, wherein when the program or instruction is executed by the processor, steps of the cell handover method according to any one of claims 1 to 5 are implemented; or
steps of the cell handover method according to any one of claims 6 to 11 are implemented.

28. A terminal device, comprising a processor, a memory, and a program or an instruction stored in the memory and executable on the processor, wherein when the program or instruction is executed by the processor, steps of the cell handover method according to any one of claims 12 to 13 are implemented.

29. A readable storage medium, storing a program or an instruction, wherein when the program or instruction is executed by a processor, steps of the cell handover method according to any one of claims 1 to 5 are implemented; or
steps of the cell handover method according to any one of claims 6 to 11 are implemented; or
steps of the cell handover method according to any one of claims 12 to 13 are implemented.

30. A chip, comprising a processor and a communication interface, wherein the communication interface is coupled to the processor, and the processor is configured to execute a program or an instruction, to implement the steps of the cell handover method according to any one of claims 1 to 5; or
to implement steps of the cell handover method according to any one of claims 6 to 11; or
to implement steps of the cell handover method according to any one of claims 12 to 13.

31. A computer program product, comprising a processor, a memory, and a program or an instruction stored in the memory and executable on the processor, wherein when the program or instruction is executed by the processor, steps of the cell handover method according to any one of claims 1 to 5 are implemented; or
steps of the cell handover method according to any one of claims 6 to 11 are implemented; or
steps of the cell handover method according to any one of claims 12 to 13 are implemented.
